# EUROPEAN PATENT SPECIFICATION

(11) **EP 0 569 610 B1**
(45) Date of publication and mention of the grant of the patent: **05.03.1997**
(21) Application number: 92108079.2
(22) Date of filing: 13.05.1992
(51) Int. Cl.: G11B 5/55

(54) **Method and apparatus for determining the tape position for a tape using dedicated servo format**
Methode und Vorrichtung zur Bestimmung der Bandposition für ein Band unter Verwendung eines speziellen Servo-Formates
Méthode et appareil pour déterminer la position d'une bande pour une bande à format de suivi spécialisé

(43) Date of publication of application: 18.11.1993
(73) Proprietor: TANDBERG DATA A/S, 0808 Oslo 8 (NO)
(72) Inventor: Strand, Steinar J., c/o Tandberg Data A/S, N-0808 Oslo 8 (NO); Solhjell, Erik, Oslo 4 (NO); Pahr, Per Olaf, N-3400 Lier (NO)
(74) Representative: Goddar, Heinz J., Dr.

(56) References cited:
- EP-A- 0 379 324
- WO-A-91/04555
- FR-A- 2 196 504

## Description

The invention relates to a method for determining the servo track pair position and, optionally, the longitudinal tape position for a tape using dedicated servo formats, said tape including at least one set of data tracks and dedicated servo tracks, wherein adjacent servo tracks are defined by longitudinal lines through the edges of erased or non-recorded tape portions. The invention further relates to an apparatus suitable for supporting the method.

The dedicated servo format for use on 1/4" tape cartridge streamers relies on prerecorded servo tracks. The servo and data track positions are placed according to the principles described in US-A 5,008,765, however, no details are given on how to implement the physical servo tracks, only the layout of the center lines for data and servo tracks can be taken from this document. QIC-91-41 (QIC-1 CF), Revision B: "Common Recording Format Specification" (October 08, 1991) and QIC-91-42 (QIC-10GB), Revision B: "Serial Recorded Magnetic Tape Cartridge for Information Interchange" (October 10, 1991) define the physical and logical layout of the servo and data tracks for the 10 GByte standard, QIC-3000, Revision A: "Proposed Interchange Standard Serial Recorded Magnetic Tape Cartridge for Information Interchange" (September 24, 1991) defines the layout for the 3 GByte standard, for 144 data and 24 servo tracks.

A servo demodulation scheme has been proposed by the 3M company. Since there is no track position information encoded into the servo tracks themselves, a drive-embedded microcontroller must be provided which at least implicitely cares for following the track numbers.

This principle is well known from hard disk drives with dedicated servo, wherein the microcontroller counts cylinder pulses issued when the servo and data heads are moved radially over the tracks and therefore always can provide information on which track the servo head is located, as it is described in Mee and Daniel, "Magnetic Recording", Volume II: Data Storage, McGraw-Hill Book Company 1988, pages 55 to 57. Since the disk spins at a constant angular velocity and the centers of the cylinders do not move with respect to the servo tracks, except for further known thermal expansions and the very small mechanical vibrations, reliable results can be obtained. However, this principle may fail when tapes are used for two reasons, namely because of the problem of track repeatability and that of the inherent physical friction between the tape and the magnetic recording head.

In a tape drive based on the serpentine 10 GByte recording format the servo tracks will wander with respect to the tape edge, and the tape itself will always move with respect to the cartridge base plate or the reference plane and hence move with respect to the magnetic recording head when the servo is not enabled. According to the above mentioned QIC standards, the servo track wander is specified to be within +/- 25.4 um with respect to the lower tape edge. Now, the movement of the tape with respect to the cartridge reference plane is specified as "track repeatability" or "dynamic tape movement" and is, according to the above standards, +/- 12.7 um in one direction. However, if the tape transport stops during running and the drive backspaces without servo control, in a worst case the track repeatability is specified as 25.4 um. If the tape starts up in the original direction again, the repeatability is 12.7 um. The situation is typically encountered during a data append operation.

Further, the specification for the 1/4" cartridge also includes the clearance between the tape guides and the tape. With a worst-case wide guide and a worst-case narrow tape, this clearance is specified to be 46 um for most of the 1/4" cartridges in use today. Furthermore, the inventors have studied laboratory measurements based on optical detection of the tape movements. These measurements show that the tape can slip on the tape guides. Normally, these types of dynamic track movements are within the specification for the cartridge. However, there is clearly a certain risk that the tape movements can be larger, for example when the tape is accelerated, negatively and positively, during a wind-rewind operation, again during a data append operation. Abrupt tape movements can in principle occur when the tape is located with its center line over the midpoint of a tape guide:
The tape can slip quickly to one of the sides from this unstable position. This situation may most likely occur when the tape guides are very close to perpendicularity with the cartridge baseplate or reference plane. Futher, the tape may have been stabilized at one side of the guides, leaving a gap of up to a maximum of 46 um. When data shall be appended to this tape in another drive located in a vertical position (i.e. within horizontal tape guides), abrupt changes of more than 25.4 um can take place.

In any case, if the dynamic tape movements are within for example +20 um during the tape speed ramp-up and rewind operation before the servo is enabled at the same time the actual servo track wanders within specifications of for example plus +15 um during this backspace operation, when the position of the center line of the actual servo track of the tape will deviate +35 um from the center of the magnetic recording head, i.e. from the center of the servo head or servo heads. Now, the track pitch on 3 GByte-10 GByte tape formats is defined to be 34 um, and therefore the center of the servo head(s) will be located very close to the center of the nominal position of the neighbour track. If the servo now tries to lock, it will fall off due to a wrong polarity of the position feedback signal. A decision on whether it is located above or below the desired track is not possible or at least very difficult to reliably implement.

The lack of servo track pair numbering will also cause great trouble when the track pitch shall be decreased in future 1/4" tape formats. The error may not even be detected in some cases and data will unavoidably be overwritten.

Normally, the actual track repeatability of a signal cartridge sample investigated in the laboratory will be much better than the specification. However, cartridges are mass produces in millions of units, and during normal use they are also subject to temperature and humidity changes and tape wear. Under all these conditions data integrity must be guaranteed. The servo system must always find the correct track number, for all cartridges and under all changes in the environmental conditions.

Secondly, the reliabilty of the proposed QIC servo format is affected by head-to-tape friction.

The read heads used for the servo are same heads as used for the data signals (totally 3 channels, 6 read gaps, of which either one channel (2 read gaps at a time) is used for the servo). Due to low-frequency noise from the magnetoresistive (MR-) element itself (noise induced in the magnetoresistive element because tape asperities cause varying thermal cooling of the element) and the DC-bias current used for the MR-element, the read channels are AC-coupled. A typical high-pass frequency can be about 50 kHz. Further, the servo signal must be demodulated. When the tape speed changes, the carrier frequency also changes with the same percentage. Depending on the actual servo demodulator technique used (fixed-frequency front-end bandpass filters etc.), it is more or less expensive to build a frequency-tracking demodulator. Typically, the demodulator is built for a narrow range of fixed tape speeds, all with carrier frequencies placed above the AC-coupling high-pass frequency.

When the end of the tape approaches, the 1/4" tape drives in use today prepare for a track shift by stopping the tape and moving the head to the location of the next track set to follow. With the 3 GByte/10GByte tape drives as specified according to the QIC standard the servo must be disabled during this operation. Thereafter, the tape accelerated in the opposite direction and the servo system tries to lock on the correct servo track. The servo system cannot be active during the complete ramp-down and ramp-up time intervalls since when the tape speed is considerably reduced, the servo carrier frequency is also reduced, and the signal-to-noise ratio may begin to be degraded, depending on where the cutoff frequency of the system has been placed. The performance of the servo system will also be degraded due to undersampling and it must be shut off. This is partly due to the fact that all transversal tape motions do not scale with the tape speed. Further, besides still other difficulties resulting from characteristic frequency components found in the transversal tape vibrations, tape slips may occur even at low tape speed. Therefore, the servo heads will be more or less off track after the ramp-down period.

Due to the friction between the tape and the head, the tape can stick to the head when it is moved in a direction perpendicular to the tape. This will most likely be observed on a statistical basis as a combination of variations from cartridge to cartridge, variations in humidity, temperature, tape tension, tape position on the tape guide, tape surface conditions like more or less worn tapes and magnetic head surface conditions. Again, the relative effect on the track position from the tape-to-head friction will be greater when the track pitch decreases, for instance in future applications.

So moving the head from one track to another without running the tape at full speed cannot be recommended. Track shift must take place before the tape has been stopped or just after it has been accelerated to full speed again in the opposite direction.

When the tape had been stopped and is then started again, the servo firmware must also perform a verification of correct polarity of the feedback signal to check if the heads are located on an even or an odd servo track and compare this polarity with the required value. Further, even if the polarity is correct and the servo can lock, the track position can be in error. In the case the servo cannot lock, the write operation must be stopped by the control firmware and start to count tracks from a known vertical position, below or above the actual servo band. This re-counting must be performed while the tape is running. It will cause a delay in the actual tape drive operation, and the streaming operation cannot be maintained.

The reason why recounting of tracks is difficult and time-consuming for a tape drive servo mechanism, is given by mechanical and reliability reasons. Due to the serpentine nature of the tape drive (in contrast to the cyclical nature of a hard file or hard disk) the preferred method for moving the heads is a combination of a stepper motor with a broad operating range and a linear, analogue actuator operating over a very limited, narrow range. This results in the lowest overall costs and the greatest resistance to mechanical shocks (the tape drive must be more reliable regarding file protection than the hard disk file it shall "back up"!) However, as described later in this application, even when a linear, high speed actuator capable of moving the head over a broad operating range is used in a high-performance, high speed track seeking servo, there remains a need for high reliability.

The problems increase for future tape formats, when the track pitch is decreased. If the track repeatability of the cartridge and the position of the servo tracks with respect to the tape edge will not be improved considerably, it is even possible that the servo heads can be located two pitches above or below the desired position. Since no track information is encoded into the servo tracks themselves, recorded data will be overwritten and lost.

Methods for automatic tracking are well known for instance in consumer video recorders, as described in Mee and Daniel, "Magnetic Recording", volume III: "Video Recording", McGraw-Hill Book Company, 1988, pages 53 to 54. The four-tone frequency method disclosed therein for analog video recorders consists in a recording of four low-frequency pilot tones, each tone being frequency multiplexed with the video recording signal, and all pilot tones being space multiplexed cyclically with four video frames or tracks. The video read head, when slightly off-track, senses its own pilot signal and a portion from the neighbour track pilot signal. The ratio of the neighbour track pilot signal to the own pilot signal determines the deviation from the desired position. The face or polarity to be used for the feedback signal is determined by the actual frequency band of the different signal which follows after analog mixing of the two actual pilot signals detected. The difference frequency detected determines in which direction the head is to be moved.

For helical scan video and data recorders, several other methods exist as alternatives to the four frequency pilot tone method. Some of these are based on recording special patterns of frequency bursts, typically from 2 to 4 possible frequencies, in the beginning of each track. These bursts are space-multiplexed both in the direction of the tracks and along the direction of the tape, as for instance disclosed in US-A 4,843,493 and US-A 4,121,264 and US-A 4,843,495. These methods, however, sample the tracking error only once at the beginning of each video or data track. Another method based on obtaining continuous servo information along the tracks is based azimuth recording and measurements of timing differences, as described in US-A 4,868,692.

It is common to all these methods that the tracks are not numbered and thus only relative positioning information can be demodulated and used for the error signal input to the servo, e.g. the encoded frequency patterns are part of the positioning measurement system of the tracking servo.

It is an object of the present invention to improve the servo format of a serpentined recorded tape using dedicated servo format, so that the system can always identify on which track the servo heads are located and so that data integrity can be maintained during write operation under all environmental conditions and under the statistical scattering encountered during high-volume production of cartridges.

This object is solved by a method as claimed in patent claim 1. An apparatus in particular carrying out the method according to the invention, is subject-matter of patent claim 1. Preferred embodiments of the method or the apparatus, respectively, are subject matter of the respective subclaims.

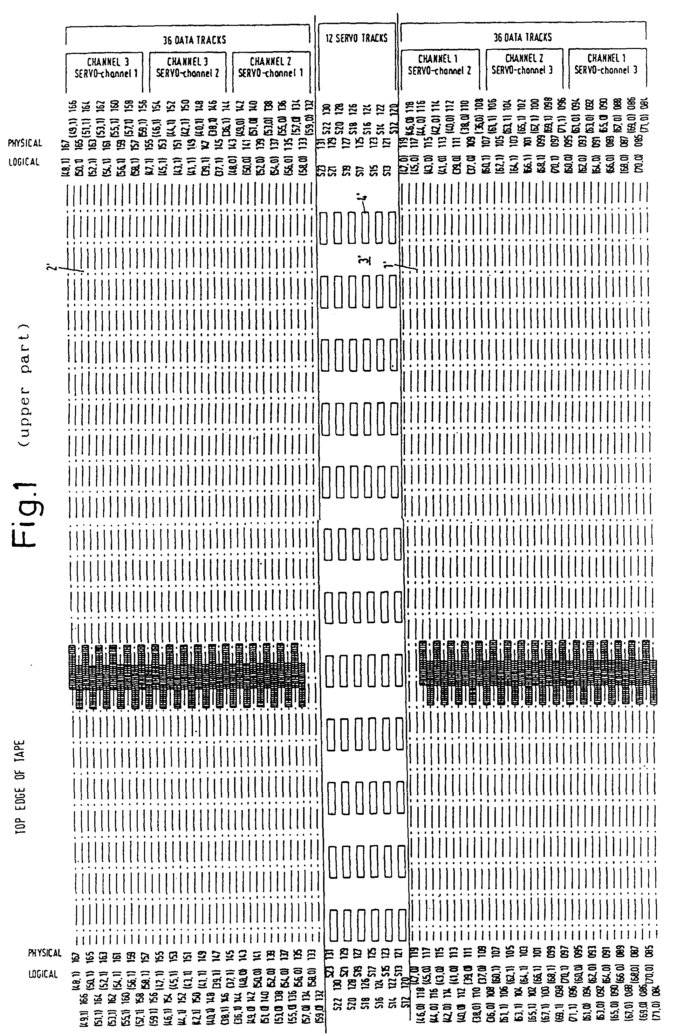

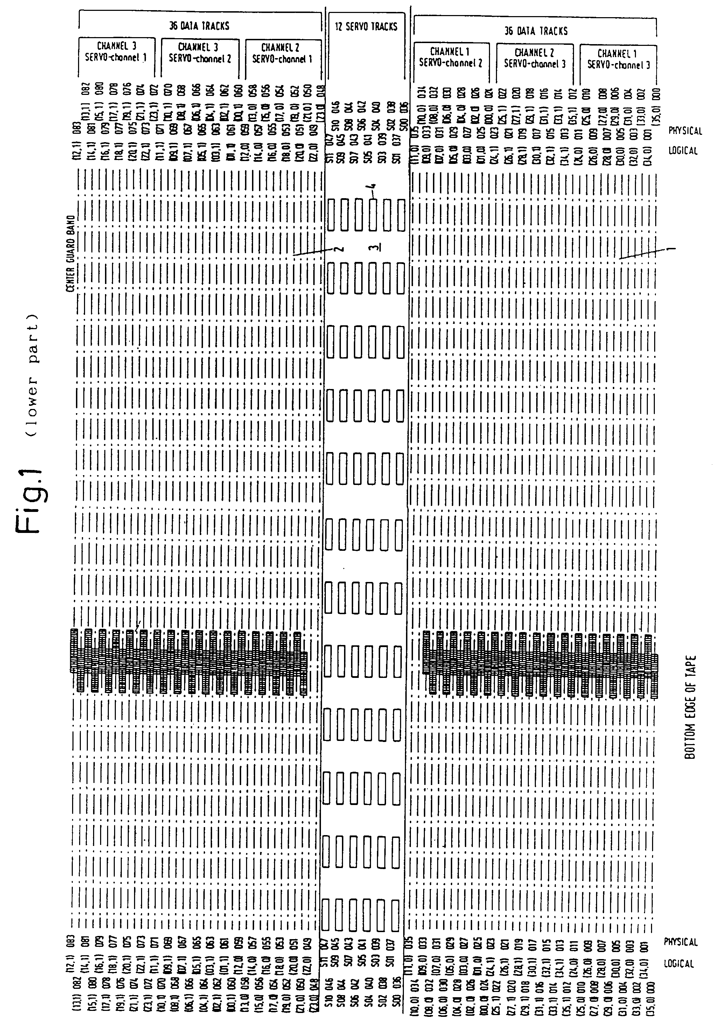

According to the invention, information about servo track pair numbers and/or servo sample numbers is recorded into said erased or non-recorded tape portions and is decoded and read back together with signals from said servo tracks. In the quarter-inch tape servo format which is disclosed in QIC-91-42 and illustrated in Figure 1, such erased or non-recorded tape portions consist of rectangles that have been erased in a continuous recording of a carrier wave. In Figure 1, these carrier waves fill portions 3 and 3', but they are not drawn there. The center line of each servo track coincides with the edges of said rectangles. Thus, these rectangles form an empty tape area which can be used for recording information signals. The invention is implemented so that each rectangle contains a single servo track position number. This number is therefore shared by both the corresponding lower (even) servo track and the corresponding upper (odd) servo track. This is sufficient, since, when the servo is in lock on either the odd or even track, the chosen polarity of the servo error signal determines if the track is odd or even. That is, the servo can not lock if the polarity was accidently in error. The method is therefore simple and foolproof.

Preferentially, a physical number corresponding to the longitudinal tape position of the servo pulses is also encoded into the carrier-empty rectangles, i.e. in the erased or non-recorded tape portions. This facilitates certain tape drive operations, for instance an effective implementation of the Quick File Access Function which is also provided as an option in the QIC standards. The mean longitudinal position of the servo heads with respect to the tape can then be calculated, and this position is very close to the position of the write head.

The invention describes two different identification coding formats.

According to a preferred embodiment, the information is recorded in a digital manner by using a digital block format of data blocks requiring preferentially less bytes per block than a data block provided on said data tracks. It will therefore require extra hardware for decoding, i.e. the normal data decoders must have an option for decoding the identification and position signal. However, as will be more clearly illustrated below, the normal read and data channels can be used for data filtering and synchronization, with minor modification required for lowpass filtering of the input to the servo demodulator. Even though this embodiment will be a preferred one since there are a lot of possibilities inherent for improving in particular the tape reliability, the information can alternatively be recorded in an analog manner using a fixed set of predetermined frequencies. This second format requires modifications to the conventional read channels and servo demodulators for the 3 GByte/10 GByte tape drives. However, it does not provide more than a relative track numbering, and there is no encoded information for the tape position. The tape position itself therefore must be found by counting the number of servo samples and therefore gives only a relative number, i.e. when the operation is stopped, it is not possible to count the exact number of servo samples, since the servo system must be disabled at low tape speeds. This embodiment of the method according to the invention is intended for use with rather wide track pitches, e.g. 34 um pitch.

Referring back to the digital format, at least one error correction character should be provided. Thereby, a good protection against read operation problems can be achieved. Such error correction characters should be used in addition to the normal data.

The data bytes are recorded as normally. At the end of a byte sequence, at least one error correction character byte is included. Such bytes may be generated using one of the many mathematical methods already known in the industry. One of such methods includes generating error correction characters by combining even-numbered data bytes including exclusive or-operations and doing the same for odd-numbered data bytes. If one of the data bytes is detected as bad during the read operation, a corresponding exclusive or-operation can be performed including all the other even or odd-numbered, respectively, data bytes, and an error-corrected character is generated.

It is also possible to use more powerful error correction methods like the Reed-Solomon system.

Preferentially each byte in a data block provided according to said digital block format should be coupled with a control byte. The control bytes may be used for some sort of parity control or the like. It has turned out to be a powerful instrument, if the control byte contains two different groups of information, the first one including cyclic redundancy information generated from the contents of the data byte and the second one containing some bits used for synchronization of the read channel.

It may also be useful to record the information about servo track pair numbers and/or servo sample numbers from a sequence of identical data blocks within one single servo sample. By introducing this redundancy, the control system will have even more opportunities to read back the data contents correctly, even if the tapes are worn and difficult to read.

An apparatus for determining the tape position relative to servo read channels for a tape using dedicated servo format, said tape including at least one set of data tracks and dedicated servo tracks with centerlines which coincide with and are defined by the longitudinal edges of erased or non-recorded rectangles in a continuous density servo carrier recording and where the information about each servo track-pair and longitudinal tape position servo sample number is recorded into the rectangles just after they have been erased or created during the manufacturing process of the tape, the apparatus including at least multiple channel head means comprising a head having at least three channels for accessing tracks on said tape, and servo demodulator means for regaining information from the signal obtained from servo tracks through said multiple channel head means, and is characterized in that a low pass filter for each servo demodulator means which is arranged upstream the associated servo demodulator means, wherein the cutoff frequency of each lowpass filter is set closely above the frequency of said servo carrier wave, and means for determining the tape position from the information about servo track pair numbers and/or servo sample numbers previously recorded in said tape portions are provided.

Preferentially, said means for determining the tape position will be a module included into a data decoder which is normally present in an apparatus of the described kind, since it is also designed to recover information from the normally recorded data tracks.

The invention is superior with respect to a simpler concept of counting blocks, because a position can be accurately monitored when the servo head traverses the servo tracks, and also when the servo channel is switched to a new read channel there is no need to actually detect every servo track position. In particular with the digital block format, the invention provides a noise immune detection, and the advantages thereof will be explained in the following.

The quickest method of moving the head and the servo channel to target track transversal and tape longitudinal positions during a "write append" or "quick file access" operation is to start the capstan motor and the head stepper/head actuator and move the head and the tape in the desired directions. The movement of the head can be very quick, about one second will be typical, however, this duration is relatively slow compared with the time scale of the servo sample durations. A need of about one second per 5 mm movement will be typical, and if a servo rectangle is assumed to be one pitch wide, i.e. 34 um, whereas the read gap width is 19 um, the time duration during which the read gap is fully within one rectangle is 34 um minus 19 um per 5 mm and per 1 s and equals 3 ms. Since the duration of one servo period is 0.1 ms, 30 samples can be read from each servo head additionally, if strong error correction as proposed according to the invention is provided, the signal can also be read at half amplitudes when the read gap is just over the center line of the servo track. Therefore, the invention will also be applicable for future tape formats with extreme narrow pitches. It is estimated that the method will be susceptible to at least 100 GByte tape streamers and possibly beyond.

The success of the digital encoding format has its further reason in that the head positioning servo shall be able to recover after a mechanical shock, and it must make a repositioning quickly, wherein it must be 100% sure that it locks on the correct track. In case an extreme shock occurs and the servo does not follow, the write current will be shut off momentary and cause the write process to be terminated. According to the measurements provided in the prior art, a track recounting procedure has to be started. In contrary to that, the invention allows just to backspace the tape - if the duration of the shock was very long - or even go directly to the desired track position for rewriting the data without stopping the tape, provided this is possible within the specifications for the track format. In this way streaming operation can be maintained under extreme environmental conditions.

Summarizing, the first essential concept of the invention is to record information during the manufacturing of the tape about the servo track pair and the servo sample numbers into the originally erased or non-recorded tape portions between the servo track center lines. These empty tape areas can be used for recording such information which can be done basically in two different ways, either by the first format in a digital manner where a special data block format is used or with a second format in a analog manner using a fixed set of predetermined frequencies.

The second essential concept of the invention which is applicable for both the first and the second method is to route the servo read signals into the normal data read-channels. According to the QIC specifications, there are two servo channels operating simultaneously on the same servo track. They are separated from each other along the direction of the tape, especially one read head is located on each side of a write head. Double servo reading ensures a reliable servo operation during read drop outs, and it also automatically provides for interpolation to find the position of the write head. If there is any need to confirm the track and tape position numbers prior to writing, the two read data channels, read gaps can be switched to read the same servo track, the read gaps displaced longitudinally with an equal distance on each side of the write head, and can in fact be used to filter and decode a servo track pair number or a longitudinal tape position number, respectively. For the latter case, since the two read gaps are located with an equal distance to both sides of the write gap, except for the unavoidable tolerance errors, a very good write gap position estimate can be obtained. Thus, the outputs from the selected heads used for servo tracking are routed to both the servo demodulators and the read channels. When the track number and tape position have been found, the servo channels are disconnected from the read channels, the normal data channels are routed to the read channels and the servo channels to the servo demodulator.

The third essential concept relates to the track seeking method available with the invention. The magnetic reading/recording head can be moved at a high speed towards the desired track and tape positions without locking the servo at each intermediate track position. Again, this is of great importance with future narrow pitch formats which may be in the 5 um to 10 um range. Of course, high speed transversal repositioning can also be performed with a prior art method, however, the reliability of correct track counting will be low. Namely, if a track count is lost during this high speed head movement, the prior art system must restart the process. Using the invention, precise track positioning is not required until the target track has been reached, since a track number position feedback is not required during the process. The positioning accuracy is enhanced by also monitoring tape position samples.

As a fourth concept, the invention will provide a possibility to improve the track seeking speed. For example, a new control loop to aid in a precise track seeking can be introduced. When using the digital encoding method according to the invention, a linear actuator capable of moving the head over its entire operating range can be used, similar to what is done in hard disk drives, where the access times can be in the 10 ms range. This may be not really necessary for a serpentine tape recording format. The track seeking speed must only be improved from several seconds to sub-second speeds.

The invention will now be described in some more detail with reference to the drawing showing examples how to perform the invention.
- Figure 1: shows the design for servo and data tracks as disclosed in QIC-91-42;
- Figure 2: shows a part of Figure 1 in greater detail;
- Figure 3: shows an example of data bytes and error correction characters;
- Figure 4: shows schematically a data byte connected with a control byte;
- Figure 5: shows schematically a possibility for obtaining redundancy in reading back data; and
- Figure 6: shows one embodiment of an apparatus designed to perform the method according to the invention.

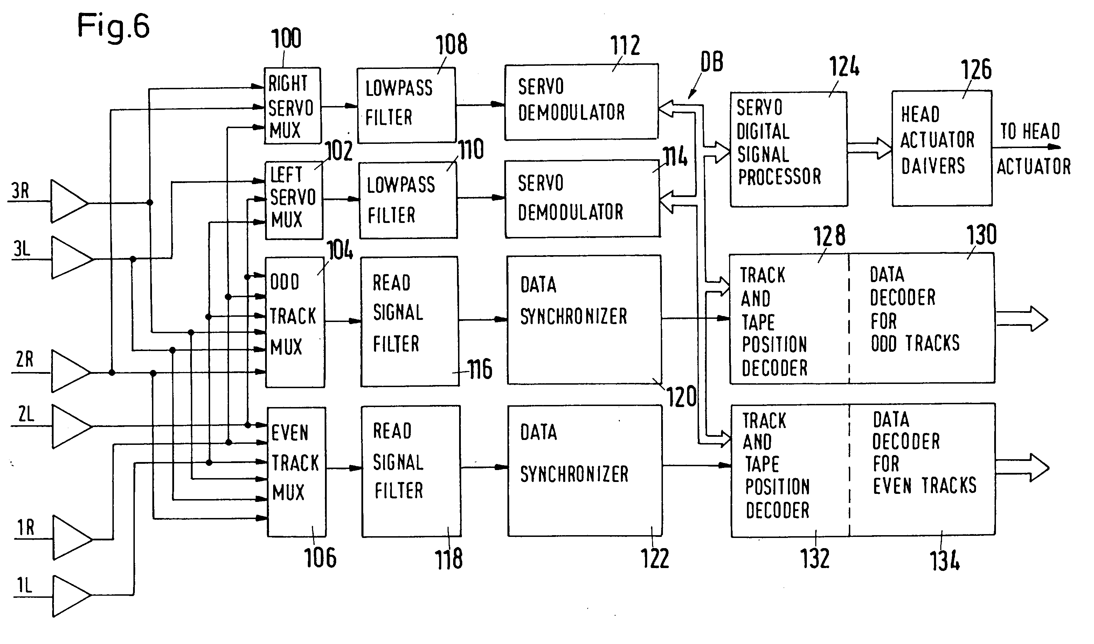

Figure 1 shows the design of data and servo tracks as disclosed in QIC-91-42. The tracks on the tape are divided into two physical partitions, each comprising two sets of 36 data tracks 1,2 and 1', 2', respectively, and a set of 12 servo tracks 3 and 3', respectively, embedded between the respective sets of data tracks. The partitions are located on the lower part of the tape and the upper part of the tape, respectively. First, the data tracks associated with the lower servo partition are recorded, thereafter the tracks associated with the upper partition. The recording of each partition follows the principle disclosed in US-A 5,008,765. The physical recording method for the servo band and its corresponding tracks consist of a one-band wide recording with a servo carrier frequency which is not shown in figure 1. Into the continuous recording with a density corresponding to a read frequency of 400 kHz at a tape running speed of 3.048 metres per second (120 inches per second (IPS)), rectangles 4 have been erased. The center line of each servo track is located along the edges of the erased or non-recorded rectangles 4. Thus, there are 6 rows of rectangles 4 and 12 servo tracks in each of the two servo bands. The numbers for the servo track pair and servo sample numbers can be recorded into those rectangles 4 and, when necessary for determining the tape position, read back into the two read channels and decoded simultaneously with a lowpass/bandpass filtered version of the same read signals and are passed on to two corresponding servo demodulators as described below with reference to figure 6.

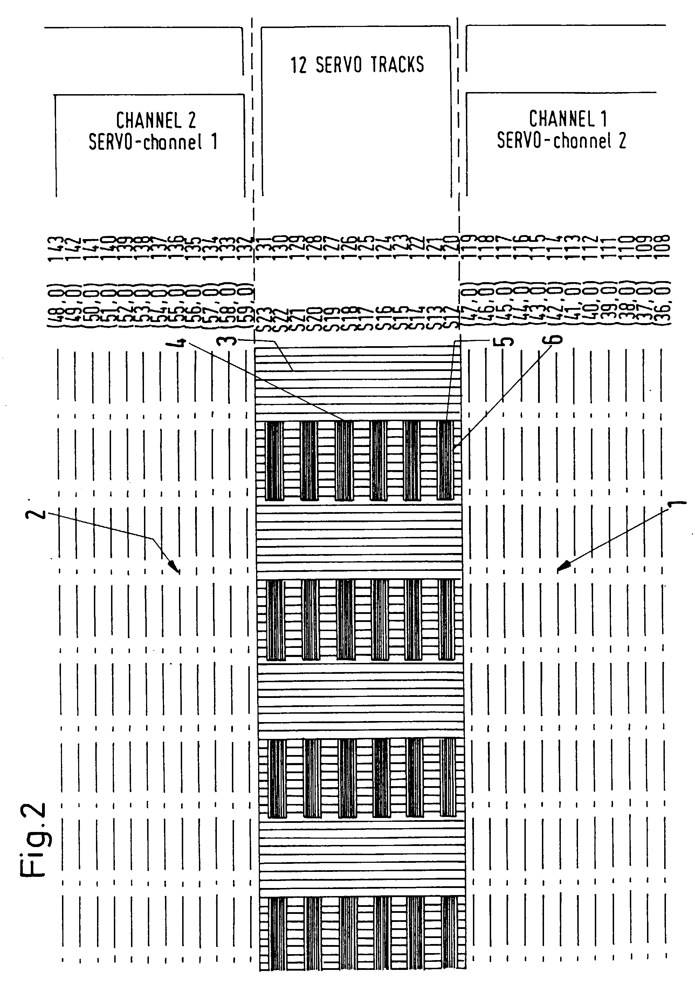

Figure 2 shows a part of Figure 1 in greater detail. The magnetic recording of the servo carrier frequency has been indicated wherein the vertical lines show the transitions in the magnetization on the tape. The rate of the servo samples is the same as the rate of the which the "black" rectangles 4 occur with. When the tape speed is 3.048 metres per second (120 IPS), the sample rate is 10 kHz. In Figure 2, the rate of the transitions 3 (positive and negative ones) is 189.3 kHz. The servo sample track pair position information is recorded with a much higher transition rate than the servo carrier. These transitions are therefore shown as "black" areas in the rectangles 4. If a (1,7) 2/3 code is used, the rate of the lowest transition frequency will be 762 kHz at 3.048 metres per second (120 IPS).

In this figure an option of the invention is also indicated for the recording which lies between the servo track centerlines for tracks S12 and S13. Here the servo track pair identification signal recording 5 is shown with a certain spacing 6 to the horizontal edges of the servo recording 3. The spacing may be used when the longitudinal tape position coding is NOT used, i.e. when a set of fixed identification signals are used, one can read the identification when the center of the read gaps are located half a pitch from the servo track centerlines, i.e. in the middle of the rectangles 4. By doing so, the lowpass filter requirement for the servo demodulator is also not so strong. In Figure 2, the pitch or distance between data and servo tracks are 34 um, whereas the width of the read gap will be 19.5 um (read gap width and location are not shown).

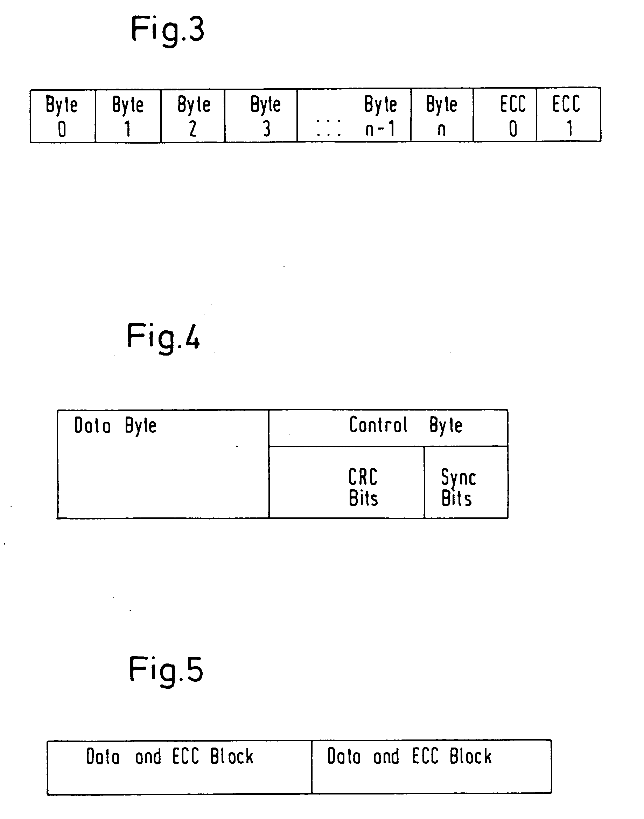

Figure 3 shows a possible layout of data bytes and error correction characters (ECC). The error correction characters are added at the end of the data byte sequence. The error correction characters are generated for instance according to a very simple method by exclusive-oring all even-numbered bytes and placing the result in ECC 0. Then all odd-numbered bytes are also exclusive-ored, and this result is placed in ECC 1. If then for example byte 2 is detected as being bad, it can be recovered by taking the exclusive-or of all the other even-numbered bytes including bytes ECC 0.

For the system to work properly, each data byte should contain some control bits in addition to the data bits. The control bits are used to detect an error in the reading of each byte. For example, 6 bits in each data byte may be used for normal data, and 2 bits may be used for some sort of parity control.

Figure 4 shows another possibility wherein each data byte is coupled with a control byte. The data byte contains one byte of data. The following control byte contains two different groups of information. The first group, which could be 2 or 5 bits long, contains special cyclic redundancy information generated from the contents of the data byte. This cyclic redundancy information is used during reading to detect if some of the bits in the byte have been read incorrectly. In this way, the system can quickly determine if a byte is bad or not and can then use the error correction methods provided with the invention. The second part of the control byte contains some bits used for synchronization of the read channel. By incorporating these bits in the control byte, the system is always synchronized before reading of the next data byte begins, except in the case of a read head drop out. The pattern used for this part of the control byte depends upon the type of encoding scheme used.

Figure 5 shows how redundancy can be obtained by repeating the whole block shown in figure 3 which may contain bytes generated by the method used in figure 4, two times. Even a three or more time repetition can be provided. By introducing this redundancy, the control system will have more opportunities to read back the data contents correctly, even in difficult cases which may occur if the tapes are worn or the like. It may seem that this extensive redundancy in error correction may not be needed, because redundancy is inherent due to repeated readings of the samples, i.e. the information content of the track number does not change from sample to sample when reading along a single servo track. Regarding the counting of pulses, it could also be argued that an exact position is not needed, because one can count the frame numbers (physical and logical) when reading data on the actual track when the servo is in lock. However, this kind of redundancy enables monitoring the tape position accurately which has the advantages outlined above. Due to the normal procedure of rewriting blocks and frames and keeping the same physical numbers, the tape position is not accurately determined. See QIC-91-42 for further details.

Figure 6 shows an example for an apparatus designed along with the encoding in a digital format. Only schematically, 6 read heads and 6 preamplifiers are shown on the left side of the figure. The channels are named 1L, 1R, 2L, 2R, 3L and 3R, where R and L are abbreviations for left and right. When looking down to the front of the magnetic recording head, the read gaps lie both to the left and right of the write gaps. Right and left servo multiplexers 100, 102 and odd track and even track multiplexers 104, 106 select the actual signal lines to be set up for the servo demodulators 112, 114 and for the even-track and odd-track read channels. Data synchronization is performed in the normal way and the serial bit stream is passed onto the track and tape position decoders 128, 132 which communicate with a servo digital signal processor 124 via data bus DB. Servo digital signal processor 124 affects head actuator drivers 126 which in turn moves the heads as required. The signals from the right and left servo multiplexers 100, 102 are passed to respective low pass filters 108, 110 before entering into the servo demodulator 112, 114. The cut of frequency for the low pass filter will be placed above the servo carrier frequency, but will not be too far from it. The cut-off frequency may also be varied according to the actual tape speed used, and the servo demodulators will also normally include band pass filters centered around the actual carrier frequency. Signals from the odd-track and even-track multiplexers 104, 106 are passed through data synchronisers 120, 122 to a data decoder for odd tracks 130 or a data decoder for even tracks 134, respectively. The track and tape position decoders 128, 130 and the data decoders 130, 134 are so designed that the track and tape position decoders 128, 132 form a seperate module within the respective data decoder 130, 134.

During normal servo operation at a tape speed 120 inches per second, the carrier is modulated with 10 kHz. To recover the servo signal, both the upper and lower sidebands are normally needed for demodulation, and the servo demodulators therefore normally include a bandpass filter centered around the actual carrier frequency to improve the signal-to-noise ratio of the detector. Also, when the tape speed is optionally changed, for example to lower the effective data rate to and from storage device, the low pass filters must be switched to a lower cutoff frequency.

The servo carrier frequency must be selected somewhat higher than the modulation frequency of the 10 kHz at 120 inches per second. The servo samples can be demodulated with synchronous detection of the carrier. This servo format is well suited for synchronous detection, because the servo carrier is always present when the servo head is within its normal operating range, i.e. the carrier is always present with a sufficient amplitude for regeneration before the lock command is given to the servo system.

Thus, the servo carrier frequency can be placed for example at 100 kHz, and the servo signal can be detected and low-pass filtered with good noise suppression of the carrier with simple active low pass filters of 4th to 6th order.

The highest recording density of the (1,7)2/3 code used in the QIC standards corresponds to a frequency of 3048 kHz at a tape speed of 120 inches per second. The lowest-density frequency for this code is 762 kHz at the same speed. The signal spectrum will have much lower frequency components, especially for some worst case patterns. Further, the tape longitudinal position encoding according to the invention ensures that the block pattern will not be constant for a single track. It will mainly consists of a counting pattern together with a fixed number for the actual pair of servo tracks. Even further, the QIC standard specifies randomizing to be used. Also this technique can enter into the invention, so even the bit pattern which corresponds to the actual fixed track number will randomized. The residual noise which appears to the servo demodulators after the low-pass filter and the normally used bandpass filter therein, will be low and random and the noise does not contribute to any fixed disturbances to the normal servo signal.

Therefore, the low pass filters 108, 110 in figure 6 are sufficient to remove the embedded track number and tape position signal from the signal passed to the servo demodulators.

Regarding the read signal processing and decoding of the encoded servo track pair and longitudinal tape position numbers, it should be noted that the error rate requirements for these signals are far from what is required for the data signals. The Read Signal filter blocks or modules 116, 118 normally also deliver both a differential version of the read signals for magnetic transition timing decoding and a low-pass version only for magnetic transition qualification, as is well known in the industry. The servo carrier noise read back together with the encoded servo track pair and longitudinal tape position information will therefore be partly suppressed, depending on where the actual servo carrier frequency is located with respect to the actual lowest frequency of the position information signal. However, to improve the servo carrier suppression a bandstop filter is also included in the Read Signal filter modules 116, 118. This bandstop filter is bypassed during reading of normal data signals, and activated only when the servo track pair and longitudinal tape position signals are processed by the read channels. If the servo carrier frequency is sufficiently low compared with the lowest density frequency of the servo track pair and longitudinal position information signal, only a slight equalization is required to compensate for the bandstop filter. Further, the actual recording level of the servo carrier and the transition rate also determines the read signal-to-noise ratio. The apparent recording level may also be set by using equalization pulses embedded in the servo recording. Such equalization is described in the QIC-91-42 document and used for the actual 10 GByte (1,7) 2/3 code used there. By a proper choice of all these systems parameters, including the attenuation of the read channel bandstop filter and its equalization, a sufficient signal-to-noise ratio is set.

Some minor amendments are necessary for using the analog encoding method. This method consist of alternatively encoding two or more constant densities which correspond to allowable frequencies in the actual code used. Again, the coded information is recorded in the erased or non-recorded rectangles in the servo pattern. For example, it will consist of four frequencies for the (1,7) 2/3 code, from the lowest to the highest densities. These frequencies are detected by a phase locked loop which can be provided in the data synchronizer 120, 122. Therefore, there is no need for a separate or additional decoder. The signal-to-noise ratio is best when the servo heads are located between two servo tracks, i.e. the servo read head is located in the middle of the rectangle. This method, accordingly has the advantage of being very simple. The cyclical or partial cyclical servo track pair signal frequency is read when the tape is running at full speed and when the servo read heads are located either slightly above or slightly below the centerlines of the servo track, i.e. the embedded discrete frequency bursts or samples are read just prior to the servo lock command is issued. With this simpler, analog discrete frequency method there is no longitudinal tape position signal to read back. Therefore, the read channel bandstop filter required to suppress the servo carrier is not required. The magnitude or level of the discrete signal frequencies are high compared with the noise from the servo carrier when the servo read gaps are within the rectangles. This embodiment of the invention therefore enhances the write protect reliability of the dedicated servo format for tapes by including an extra confirmation of which servo track pair number the read gaps are located over just prior to the issue of the servo lock command.

The features disclosed in the foregoing description, in the claims and/or in the accompanying drawings may, both separately and in any combination thereof, be material for realising the invention in diverse forms thereof.

## Claims

1. A method for determining the servo track pair position and longitudinal tape position for a tape using dedicated servo format, said tape including at least one set of data tracks (1,2,1',2') and dedicated servo tracks (3,3'), wherein adjacent servo tracks are defined by longitudinal lines through the edges of erased or non-recorded tape portions (4), **characterized** in that information about servo track pair numbers and/or servo sample numbers is recorded into said tape portions and is decoded and read back together with signals from said servo track, wherein the information is recorded in a digital manner by using a digital block format of data blocks requiring preferentially less bytes per block than a data block provided on said data tracks.

2. The method as claimed in claim 1, characterized in that a physical number corresponding to the longitudinal tape position of the servo pulses is encoded into the erased or non-recorded tape portions (4).

3. The method as claimed in claim 2, characterized in that said data blocks provided according to said digital block format contain at least one error correction character.

4. The method as claimed in claim 3, characterized in that a first one of said error correction characters is generated by combining even-numbered data bytes using exclusive-or operations and that a second one of said error correction characters is generated by combining odd-numbered data bytes using exclusive-or operations, said data bytes being contained in a respective one of the data blocks provided according to said digital block format.

5. The method as claimed in claim 3, characterized in that a Reed-Solomon procedure is implemented for error correction.

6. The method as claimed in claim 1, characterized in that each data byte in a data block provided according to said digital block format is coupled with a control byte.

7. The method as claimed in claim 6, characterized in that said control byte contains cyclic redundancy information generated from the contents of the associated data byte and/or information for synchronizing a read channel used for reading the information about servo track pair numbers and/or servo sample numbers.

8. The method as claimed in claim 1, characterized in that the information about servo track pair numbers and/or servo sample numbers is obtained from a sequence of identical data blocks.

9. A method for determining the servo track pair position for a tape using dedicated servo format, said tape including at least one set of data tracks and dedicated servo tracks, wherein adjacent servo tracks (3,3') are defined by longitudinal lines through the edges of erased or non-recorded tape portions (4), **characterized** in that information about servo track pair numbers and/or servo sample numbers is recorded into said tape portions and is decoded and read back together with signals from said servo track, wherein the information is recorded in an analog manner using a fixed set of predetermined frequencies.

10. An apparatus for determining the tape position relative to servo read channels for a tape using dedicated servo format, said tape including at least one set of data tracks and dedicated servo tracks with centerlines which coincide with and are defined by the longitudinal edges of erased or non-recorded rectangles in a continous density servo carrier recording and where the information about each servo track pair and longitudinal tape position servo sample number is recorded into the rectangles just after they have been erased or created during the manufacturing process of the tape, said apparatus including
- multiple channel head means (1L, 1R, 2L, 2R, 3L, 3R), comprising a head having at least three channels for accessing tracks on said tape;
- servo demodulator means (112, 114) for regaining information from the signal obtained from said servo tracks through said multiple channel head means;
- a low pass filter (108, 110) for each servo demodulator means (112, 114) which is arranged upstream the associated servo demodulator means (112, 114) wherein the cutoff frequency of each low pass filter (108, 110) is set closely above the frequency of said servo carrier wave; and
- means for determining the tape position (128, 132) from the information about servo track pair numbers and/or servo sample numbers previously recorded in said tape portions.

11. The apparatus as claimed in claim 10, characterized in that said means for determining the tape position (128, 132) is designed as a separate module in a data decoder (130, 134) provided for decoding data signals.

## Patentansprüche

1. Verfahren zum Bestimmen der Position des Servospurenpaars und der Bandposition in Längsrichtung für ein Band, das ein spezielles Servoformat besitzt, wobei das Band wenigstens einen Satz von Datenspuren (1, 2, 1', 2') und spezielle Servospuren (3, 3') hat, wobei benachbarte Servospuren durch Längslinien durch die Kanten von Bandabschnitten (4), die gelöscht oder auf die nicht aufgezeichnet worden ist, definiert sind, dadurch gekennzeichnet, daß Information über Servospurpaarzahlen und/oder Servomomentanwertzahlen in die Bandabschnitte aufgezeichnet wird und zusammen mit Signalen von der Servospur decodiert und zurückgelesen wird, wobei die Information in digitaler Weise aufgezeichnet wird, indem ein digitales Blockformat von Datenblöcken verwendet wird, die bevorzugt weniger Bytes pro Block als ein Datenblock, der auf den Datenspuren vorgesehen ist, erfordert.

2. Verfahren nach Anspruch 1, dadurch gekennzeichnet, daß eine physische Zahl, die der Bandposition des Servopulses in Längsrichtung entspricht, in die Bandabschnitte (4), die gelöscht, oder auf die nicht aufgezeichnet worden ist, codiert wird.

3. Verfahren nach Anspruch 2, dadurch gekennzeichnet, daß die Datenblöcke, die entsprechend dem digitalen Blockformat vorgesehen sind, wenigstens ein Fehlerkorrekturzeichen enthalten.

4. Verfahren nach Anspruch 3, dadurch gekennzeichnet, daß ein erstes der Fehlerkorrekturzeichen erzeugt wird, indem geradzahlige Datenbytes unter Verwendung von Exklusiv-Oder-Operationen kombiniert werden, und daß ein zweites der Fehlerkorrekturzeichen erzeugt wird, indem ungeradzahlige Datenbytes unter Verwendung von Exklusiv-Oder-Operationen kombiniert werden, wobei die Datenbytes in einem jeweiligen der Datenblöcke, die entsprechend dem digitalen Blockformat vorgesehen sind, enthalten sind.

5. Verfahren nach Anspruch 3, dadurch gekennzeichnet, daß für die Fehlerkorrektur eine Reed-Solomon-Prozedur implementiert wird.

6. Verfahren nach Anspruch 1, dadurch gekennzeichnet, daß jedes Datenbyte in einem Datenblock, der entsprechend dem digitalen Blockformat vorgesehen ist, mit einem Steuerbyte gekoppelt ist.

7. Verfahren nach Anspruch 6, dadurch gekennzeichnet, daß das Steuerbyte zyklisch redundante Information, erzeugt aus den Inhalten des zugeordneten Datenbytes, und/oder aus Information zum Synchronisieren eines Lesekanals, der zum Lesen der Information über die Servospurpaarzahlen und/oder Servomomentanwertzahlen verwendet wird, enthält.

8. Verfahren nach Anspruch 1, dadurch gekennzeichnet, daß die Information über Servospurpaarzahlen und/oder Servomomentanwertzahlen aus einer Sequenz identischer Datenblöcke erhalten wird.

9. Verfahren zum Bestimmen der Servospurpaar-Position für ein Band, das ein spezielles Servoformat benutzt, wobei das Band wenigstens einen Satz von Datenspuren und spezielle Servospuren aufweist, wobei benachbare Servospuren (3, 3') durch Längslinien durch die Kanten von Bandabschnitten (4), die gelöscht oder auf die nicht aufgezeichnet worden ist, definiert sind, dadurch gekennzeichnet, daß Information über Servospurpaarzahlen und/oder Servomomentanwertzahlen auf die Bandabschnitte aufgezeichnet wird und zusammen mit Signalen von der Servospur decodiert und zurückgelesen wird, wobei die Information in einer analogen Weise aufgezeichnet wird, wobei ein fester Satz vorbestimmter Frequenzen verwendet wird.

10. Vorrichtung zum Bestimmen der Bandposition relativ zu Servolesekanälen für ein Band, das ein spezielles Servoformat verwendet, wobei das Band wenigstens einen Satz von Datenspuren und spezielle Servospuren mit Mittellinien umfaßt, die mit Längskanten von Rechtecken, die gelöscht sind oder auf die nicht aufgezeichnet ist, bei einer Servoträgeraufzeichnung mit kontinuierlicher Dichte, übereinstimmen und dadurch definiert sind und wobei die Information über jedes Servospurenpaar und über die Servomomentanwertzahl und der Bandposition in Längsrichtung in die Rechtecke unmittelbar nachdem sie gelöscht oder während des Herstellungsprozesses des Bandes erzeugt worden sind, eingeschrieben wird, wobei die Vorrichtung aufweist:
- eine Vielkanalkopfeinrichtung (1L, 1R, 2L, 2R, 3L, 3R), mit einem Kopf, der wenigstens drei Kanäle für den Zugriff auf Spuren auf dem Band hat;
- eine Servo-Demodulatoreinrichtung (112, 114) zum Rückgewinnen von Information aus dem Signal, das von den Servospuren durch die Vielkanal-Kopfeinrichtung erhalten wird;
- einen Tiefpaßfilter (108, 110) für jede Servo-Demodulatoreinrichtung (112, 114), der stromaufwärts der zugeordneten Servo-Demodulatoreinrichtung (112, 114) angeordnet ist, wobei die Abschneidefrequenz jedes Tiefpaßfilters (108, 110) nahe oberhalb der Frequenz der Servoträgerwelle eingestellt ist; und
- eine Einrichtung zum Bestimmen der Bandposition (128, 132) aus der Information über die Servospurpaarzahlen und/oder Servomomentanwertzahlen, die zuvor in den Bandabschnitten aufgezeichnet waren.

11. Vorrichtung nach Anspruch 10, dadurch gekennzeichnet, daß die Einrichtung zum Festlegen der Bandposition (128, 132) als ein separates Modul in einem Datendecodierer (130, 134) ausgestaltet ist, der zum Decodieren von Datensignalen vorgesehen ist.

## Revendications

1. Procédé de détermination de la position de paires de pistes d'asservissement et de la position longitudinale d'une bande pour une bande utilisant un format d'asservissement spécialisé, cette bande comportant au moins un groupe de pistes de données (1, 2, 1', 2') et de pistes d'asservissement spécialisées (3, 3'), dans lequel des pistes d'asservissement voisines sont définies par des lignes longitudinales passant par les bords de parties de la bande effacées ou non enregistrées (4), caractérisé par le fait que des informations relatives aux nombres de paires de pistes d'asservissement et/ou aux nombres d'échantillons d'asservissement sont enregistrées dans lesdites parties de la bande et sont décodées et lues en même temps que des signaux émanant de la piste d'asservissement, ces informations étant enregistrées numériquement au moyen d'un format de bloc numérique de blocs de données demandant préférentiellement moins d'octets par bloc qu'un bloc de données prévu sur les pistes de données.

2. Procédé selon la revendication 1, caractérisé par le fait qu'un nombre physique, correspondant à la position longitudinale de la bande, d'impulsions d'asservissement est codé dans les parties effacées ou non enregistrées (4) de la bande.

3. Procédé selon la revendication 2, caractérisé par le fait que les blocs de données prévus selon le format de bloc numérique contiennent au moins un caractère de correction d'erreurs.

4. Procédé selon la revendication 3, caractérisé par le fait qu'un premier caractère de correction d'erreurs est produit par combinaison d'octets de données de numéros pairs par des opérations OU exclusif et qu'un deuxième caractère de correction d'erreurs est produit par combinaison d'octets de données de numéros impairs par des opérations OU exclusif, les octets de données étant contenus dans un bloc respectif des blocs de données prévus selon le format de bloc numérique.

5. Procédé selon la revendication 3, caractérisé par le fait qu'une procédure de Reed-Solomon est exécutée pour la correction des erreurs.

6. Procédé selon la revendication 1, caractérisé par le fait que chaque octet d'un bloc de données prévu selon le format de bloc numérique est associé à un octet de commande.

7. Procédé selon la revendication 6, caractérisé par le fait que l'octet de commande contient des informations de redondance cyclique produite à partir du contenu de l'octet de données associé et/ou une information pour la synchronisation d'une voie de lecture utilisée pour la lecture des informations relatives aux nombres de paires de pistes d'asservissement et/ou aux nombres d'échantillons d'asservissement.

8. Procédé selon la revendication 1, caractérisé par le fait que les informations relatives aux nombres de paires de pistes d'asservissement et/ou aux nombres d'échantillons d'asservissement sont obtenues à partir d'une suite de blocs d'information identiques.

9. Procédé de détermination de la position de paires de pistes d'asservissement pour une bande utilisant un format d'asservissement spécialisé, cette bande comportant au moins un groupe de pistes de données et de pistes d'asservissement spécialisées, dans lequel des pistes d'asservissement voisines (3, 3') sont définies par des lignes longitudinales passant par les bords de parties effacées ou non enregistrées (4) de la bande, caractérisé par le fait que des informations relatives aux nombres de paires de pistes d'asservissement et/ou aux nombres d'échantillons d'asservissement sont enregistrées dans lesdites parties de la bande et sont décodées et lues en même temps que des signaux émanant de la piste d'asservissement, ces informations étant enregistrées analogiquement au moyen d'un ensemble fixe de fréquences déterminées.

10. Appareil pour la détermination de la position d'une bande par rapport à des voies de lecture d'asservissement pour une bande utilisant un format d'asservissement spécialisé, cette bande comportant au moins un groupe de pistes de données et de pistes d'asservissement spécialisées ayant des lignes centrales qui coïncident avec et sont définies par les bords longitudinaux de rectangles effacés ou non enregistrés dans un enregistrement à porteuse d'asservissement à densité continue et où les informations relatives à chaque nombre de paires de pistes d'asservissement et d'échantillons d'asservissement de position longitudinale de la bande sont enregistrées dans les rectangles juste après que ceux-ci ont été effacés ou créés pendant la fabrication de la bande, cet appareil comportant :
- des moyens de têtes multivoies (1L, 1R, 2L, 2R, 3L, 3R) comprenant une tête ayant au moins trois voies pour accéder à des pistes sur la bande,
- des moyens de démodulation d'asservissement (112, 114) pour la récupération d'informations à partir du signal obtenu à partir des pistes d'asservissement par l'intermédiaire des moyens de têtes multivoies,
- un filtre passe-bas (108, 110) pour chaque moyen de démodulation d'asservissement (112, 114) qui est monté en amont du moyen de démodulation d'asservissement (112, 114) associé, la fréquence de coupure de chaque filtre passe-bas (108, 110) étant fixée juste au-dessus de la fréquence de l'onde porteuse d'asservissement, et
- un moyen de détermination de la position de la bande (128, 132) à partir des informations relatives aux nombres de paires de pistes d'asservissement et/ou aux nombres d'échantillons d'asservissement enregistrée précédemment dans lesdites parties de la bande.

11. Appareil selon la revendication 10, caractérisé par le fait que le moyen de détermination de la position de la bande (128, 132) est conçu sous forme de module séparé dans un décodeur de données (130, 134) prévu pour le décodage de signaux de données..
